(19) Europäisches Patentamt / European Patent Office / Office européen des brevets

(11) EP 4 648 251 A1

(12) EUROPEAN PATENT APPLICATION
published in accordance with Art. 153(4) EPC

(43) Date of publication:
12.11.2025 Bulletin 2025/46

(21) Application number: 23927168.7

(22) Date of filing: 29.11.2023

(51) International Patent Classification (IPC):
H02J 7/00 (2006.01)

(52) Cooperative Patent Classification (CPC):
H01M 10/44; H02J 7/00

(86) International application number:
PCT/CN2023/135157

(87) International publication number:
WO 2024/187827 (19.09.2024 Gazette 2024/38)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 15.03.2023 CN 202310284895

(71) Applicant: Honor Device Co., Ltd.
Shenzhen, Guangdong 518040 (CN)

(72) Inventors:
• TANG, Nengfu
  Shenzhen, Guangdong 518040 (CN)
• GONG, Weilin
  Shenzhen, Guangdong 518040 (CN)
• SHEN, Li
  Shenzhen, Guangdong 518040 (CN)

(74) Representative: Isarpatent
Patent- und Rechtsanwälte
Barth Hassa Peckmann & Partner mbB
Friedrichstraße 31
80801 München (DE)

(54) **CHARGING METHOD AND ELECTRONIC DEVICE**

(57) Embodiments of this application are applicable to the field of charging technologies, and provide a charging method and an electronic device. A to-be-charged apparatus sends first information including remaining electric quantity information of the to-be-charged apparatus to a charging apparatus. The charging apparatus determines a target charging policy from a plurality of candidate charging policies based on the first information. The charging apparatus outputs electric energy to the to-be-charged apparatus according to the target charging policy. In this way, the charging apparatus may flexibly determine the target charging policy from the plurality of candidate charging policies according to the remaining electric quantity information of the to-be-charged apparatus, and then output the electric energy to the to-be-charged apparatus according to the target charging policy. To be specific, charging policies of the to-be-charged apparatus are richer, and charging flexibility of the to-be-charged apparatus is improved.

Receive first information sent by a to-be-charged apparatus — S601

Determine a target charging policy based on the first information — S602

Charge the to-be-charged apparatus according to the target charging policy — S603

FIG. 9

## Description

This application claims priority to Chinese Patent Application No. 202310284895.5, filed with the China National Intellectual Property Administration on March 15, 2023 and entitled "CHARGING METHOD AND ELECTRONIC DEVICE", which is incorporated herein by reference in its entirety.

## TECHNICAL FIELD

This application relates to the field of charging technologies, and more specifically, to a charging method and an electronic device.

## BACKGROUND

At present, with attention paid to physical health of people, smart wearable devices such as a sports watch and a sports bracelet are widely applied. The sports watch or the sports bracelet is charged by being connected to a charging base.

For the sports bracelet, the charging base generally has only two contacts, and the sports bracelet is connected to the two contacts on the charging base and may be charged. However, the two contacts on the charging base can only perform current transmission, and data exchange between the charging base and the sports bracelet cannot be implemented. In this way, when the sports bracelet is charged through the charging base, the sports bracelet can only be charged in a fixed charging manner, with low flexibility.

Based on this, how to enrich charging policies of the sports bracelet and improve charging flexibility has become a problem to be urgently resolved.

## SUMMARY

This application provides a charging method, which can enrich charging policies of a to-be-charged apparatus and improve charging flexibility.

According to a first aspect, a charging method is provided, applied to a charging apparatus. The charging apparatus charges a to-be-charged apparatus in a contact charging manner. The method includes:

receiving first information sent by the to-be-charged apparatus, where the first information includes remaining electric quantity information of the to-be-charged apparatus;
determining a target charging policy based on the first information, where the target charging policy is one charging policy determined from a plurality of candidate charging policies, and charging policies in the plurality of candidate charging policies have different charging rates; and
charging the to-be-charged apparatus according to the target charging policy.

It should be understood that the contact charging manner generally means that the to-be-charged apparatus is charged through contacts disposed on the charging apparatus. The contacts disposed on the charging apparatus usually can only transmit a current and cannot perform data exchange. To be specific, in this embodiment of this application, a to-be-charged device and a charging device cannot perform data exchange through contacts for charging, and the to-be-charged apparatus cannot send the first information to the charging apparatus through the contacts.

For example, the plurality of candidate charging policies may include a fast-charging policy, a slow-charging policy, and a trickle-charging policy.

According to the charging method provided by this embodiment of this application, a to-be-charged apparatus sends first information including remaining electric quantity information of the to-be-charged apparatus to a charging apparatus. The charging apparatus determines a target charging policy from a plurality of candidate charging policies based on the first information. The charging apparatus outputs electric energy to the to-be-charged apparatus according to the target charging policy. In this way, the charging apparatus may flexibly determine the target charging policy from the plurality of candidate charging policies according to the remaining electric quantity information of the to-be-charged apparatus, and then output the electric energy to the to-be-charged apparatus according to the target charging policy. To be specific, charging policies of the to-be-charged apparatus are richer, and charging flexibility of the to-be-charged apparatus is improved.

With reference to the first aspect, in some implementations of the first aspect, the first information further includes a first moment. The first moment is a moment which is recorded by the to-be-charged apparatus and at which an interrupt signal is generated. The interrupt signal is a signal generated by touching when the charging apparatus charges the to-be-charged apparatus. The determining a target charging policy based on the first information includes: obtaining a difference between the first moment and a second moment, where the second moment is a moment which is recorded by the charging apparatus and at which the interrupt signal is generated; and determining the target charging policy based on the remaining electric quantity information if the difference is less than a first preset threshold.

It should be understood that one charging apparatus may charge a plurality of to-be-charged apparatuses. In this case, to prevent the charging apparatus from frequently selecting the target charging policy and increase a calculation load of the charging apparatus, the charging apparatus may find the target charging policy from the plurality of candidate charging policies only after determining that the to-be-charged apparatus matches the charging apparatus.

According to the charging method provided in this embodiment of this application, a to-be-charged apparatus sends first information including remaining electric quantity information of the to-be-charged apparatus and a first moment to a charging apparatus. The charging apparatus determines a target charging policy from a plurality of candidate charging policies in a case that a difference between the first moment and a second moment in the first information is less than a first preset threshold. The charging apparatus outputs electric energy to the to-be-charged apparatus according to the target charging policy. The first moment is a moment which is recorded by the to-be-charged apparatus and at which an interrupt signal is generated. The interrupt signal is a signal generated by touching when the charging apparatus charges the to-be-charged apparatus. The second signal is a moment which is recorded by the charging apparatus and at which the interrupt signal is generated. If the difference between the first moment and the second moment is less than the first preset threshold, it indicates that the to-be-charged apparatus and the charging apparatus simultaneously generate the interrupt signal. To be specific, the to-be-charged apparatus and the charging apparatus have been matched for charging, and charging may be started. In this way, the charging apparatus may flexibly determine the target charging policy from the plurality of candidate charging policies according to the remaining electric quantity information of the to-be-charged apparatus only in a case that the to-be-charged apparatus and the charging apparatus have been matched for charging, and then output electric energy to the to-be-charged apparatus according to the target charging policy, thereby reducing a calculation load of the charging apparatus.

With reference to the first aspect, in some implementations of the first aspect, the first information further includes a first power. The first power is a transmitted power at which the to-be-charged apparatus sends the first information. The determining a target charging policy based on the first information includes: obtaining a second power, where the second power is a received power at which the charging apparatus receives the first information; determining a first distance based on the first power and the second power, where the first distance is a distance between the charging apparatus and the to-be-charged apparatus; and determining the target charging policy based on the remaining electric quantity information if the first distance is less than a second preset threshold.

According to the charging method provided in this embodiment of this application, a to-be-charged apparatus sends first information including remaining electric quantity information and transmitted power (first power) for sending the first information to a charging apparatus. The charging apparatus obtains a received power (second power) at which the charging apparatus receives the first information, then determines a distance (first distance) between an electronic device and the charging apparatus according to the first power and the second power, and determines a target charging policy from a plurality of candidate charging policies in a case that the first distance is less than a second preset threshold. The charging apparatus outputs electric energy to the to-be-charged apparatus according to the target charging policy. In a case that the first distance is less than the second preset threshold, it indicates that the distance between the to-be-charged apparatus and the charging apparatus is relatively small. In this way, the charging apparatus may output the electric energy to the to-be-charged apparatus. Only in this case, the charging apparatus flexibly determines the target charging policy from the plurality of candidate charging policies according to the remaining electric quantity information of the to-be-charged apparatus, and then outputs the electric energy to the to-be-charged apparatus according to the target charging policy, thereby reducing a calculation load of the charging apparatus.

With reference to the first aspect, in some implementations of the first aspect, the charging apparatus includes a microcontroller unit (MCU). The determining the target charging policy based on the remaining electric quantity information includes: determining, by the microcontroller unit (MCU), the target charging policy based on the remaining electric quantity information.

Generally, a charging base for charging a smart bracelet does not have a data processing capability. Therefore, in a charging system formed by the smart bracelet and the charging base, a microcontroller unit (Microcontroller Unit, MCU) may be added to the charging base, and a target charging policy is determined by the MCU.

According to the charging method provided in this embodiment of this application, a smart bracelet sends first information including remaining electric quantity information to a charging base. An MCU in the charging base determines, based on the first information, a target charging policy from a plurality of candidate charging policies. Then, the MCU in the charging base controls, by using the target charging policy, a charging management module to charge the smart bracelet. Because a conventional charging base does not have a data processing function, in this embodiment of this application, the MCU is added to the charging base, so that the charging base can process the first information through the MCU, and select the target charging policy from the plurality of candidate charging policies based on the first information, thereby enriching charging policies of the smart bracelet and improving charging flexibility of the smart bracelet.

With reference to the first aspect, in some implementations of the first aspect, the charging apparatus further includes a charging management module. The charging the to-be-charged apparatus according to the target charging policy includes: controlling, by the MCU using the target charging policy, the charging management module to charge the to-be-charged apparatus.

According to a second aspect, a charging method is provided, applied to a to-be-charged apparatus. The to-be-charged apparatus is charged by a charging apparatus using a contact charging method. The method includes:

sending first information to the charging apparatus, where the first information includes remaining electric quantity information of the to-be-charged apparatus; and

receiving electric energy outputted by the charging apparatus according to a target charging policy, where the target charging policy is one charging policy determined by the charging apparatus based on the first information from a plurality of candidate charging policies, and charging policies in the plurality of candidate charging policies have different charging rates.

According to the charging method provided by this embodiment of this application, a to-be-charged apparatus sends first information including remaining electric quantity information of the to-be-charged apparatus to a charging apparatus. The charging apparatus determines a target charging policy from a plurality of candidate charging policies based on the first information. The charging apparatus outputs electric energy to the to-be-charged apparatus according to the target charging policy. In this way, the charging apparatus may flexibly determine the target charging policy from the plurality of candidate charging policies according to the remaining electric quantity information of the to-be-charged apparatus, and then output the electric energy to the to-be-charged apparatus according to the target charging policy. To be specific, charging policies of the to-be-charged apparatus are richer, and charging flexibility of the to-be-charged apparatus is improved.

With reference to the second aspect, in some implementations of the second aspect, the sending first information to the charging apparatus includes: generating a broadcast signal based on the first information; and sending the broadcast signal to the charging apparatus according to a preset frequency.

With reference to the second aspect, in some implementations of the second aspect, the sending the broadcast signal to the charging apparatus according to a preset frequency includes: sending the broadcast signal to the charging apparatus according to the preset frequency in a Bluetooth manner.

According to the charging method provided in this embodiment of this application, in a process in which a smart bracelet sends first information to a charging base, the first information is broadcast according to a preset frequency in a Bluetooth manner. In this way, the charging base does not need to send a request for obtaining the first information to the smart bracelet, and the smart bracelet can automatically send the first information for multiple times, thereby improving reliability that the charging base can receive the first information, and further improving reliability that the charging base determines a target charging policy based on the first information.

With reference to the second aspect, in some implementations of the second aspect, a type of the broadcast signal is a universally unique identification code (UUID) or service data.

With reference to the second aspect, in some implementations of the second aspect, the method further includes: obtaining current electric quantity information; determining, according to the current electric quantity information and the remaining electric quantity information, whether an electric quantity of the to-be-charged apparatus increases; and stopping sending the broadcast information if the electric quantity of the to-be-charged apparatus increases.

According to the charging method provided in this embodiment of this application, a smart bracelet sends first information including remaining electric quantity information to a charging base. An MCU in the charging base determines, based on the first information, a target charging policy from a plurality of candidate charging policies. Then, the MCU in the charging base controls, by using the target charging policy, a charging management module to charge the smart bracelet. Then, the smart bracelet can further continuously obtain current electric quantity information, and determine, in real time according to the current electric quantity information and the remaining electric quantity information, whether an electric quantity of the smart bracelet is increasing. If the electric quantity of the smart bracelet is increasing, it indicates that the charging base already starts to charge the smart bracelet. Therefore, the smart bracelet stops broadcasting the first information, so that the charging base does not need to continue to determine the target charging policy according to the first information, thereby avoiding a case that frequent determining of the target charging policy according to the first information by the charging base occupies calculation power of the charging base.

With reference to the second aspect, in some implementations of the second aspect, the to-be-charged apparatus is a smartwatch or a smart bracelet.

According to a third aspect, a charging system is provided. The charging system includes a charging apparatus and a to-be-charged apparatus. The charging apparatus charges the to-be-charged apparatus in a contact charging manner. The system includes the following operations:

sending, by the to-be-charged apparatus, first information to the charging apparatus, where the first information includes remaining electric quantity information of the to-be-charged apparatus; and

determining, by the charging apparatus, a target charging policy based on the first information, where the target charging policy is one charging policy determined from a plurality of candidate charging policies, and charging policies in the plurality of candidate charging policies have different charging rates; and

charging, by the charging apparatus, the to-be-charged apparatus according to the target charging policy.

According to the charging system provided by this embodiment of this application, a to-be-charged apparatus sends first information including remaining electric quantity information of the to-be-charged apparatus to a charging apparatus. The charging apparatus determines a target charging policy from a plurality of candidate charging policies based on the first information. The charging apparatus outputs electric energy to the to-be-charged apparatus according to the target charging policy. In this way, the charging apparatus may flexibly determine the target charging policy from the plurality of candidate charging policies according to the remaining electric quantity information of the to-be-charged apparatus, and then output the electric energy to the to-be-charged apparatus according to the target charging policy. To be specific, charging policies of the to-be-charged apparatus are richer, and charging flexibility of the to-be-charged apparatus is improved.

With reference to the third aspect, in some implementations of the third aspect, the first information further includes a first moment. The first moment is a moment which is recorded by the to-be-charged apparatus and at which an interrupt signal is generated. The interrupt signal is a signal generated by touching when the charging apparatus charges the to-be-charged apparatus. The determining, by the charging apparatus, a target charging policy based on the first information includes: obtaining, by the charging apparatus, a difference between the first moment and a second moment, where the second moment is a moment which is recorded by the charging apparatus and at which the interrupt signal is generated; and determining, by the charging apparatus, the target charging policy based on the remaining electric quantity information if the difference is less than a first preset threshold.

With reference to the third aspect, in some implementations of the third aspect, the first information further includes a first power. The first power is a transmitted power at which the to-be-charged apparatus sends the first information. The determining, by the charging apparatus, a target charging policy based on the first information includes: obtaining, by the charging apparatus, a second power, where the second power is a received power at which the charging apparatus receives the first information; determining, by the charging apparatus, a first distance based on the first power and the second power, where the first distance is a distance between the charging apparatus and the to-be-charged apparatus; and determining, by the charging apparatus, the target charging policy based on the remaining electric quantity information if the first distance is less than a second preset threshold.

With reference to the third aspect, in some implementations of the third aspect, the charging apparatus includes a microcontroller unit (MCU). The determining, by the charging apparatus, the target charging policy based on the remaining electric quantity information includes: determining, by the microcontroller unit (MCU), the target charging policy based on the remaining electric quantity information.

With reference to the third aspect, in some implementations of the third aspect, the charging apparatus further includes a charging management module. The charging, by the charging apparatus, the to-be-charged apparatus according to the target charging policy includes: controlling, by the MCU using the target charging policy, the charging management module to charge the to-be-charged apparatus.

With reference to the third aspect, in some implementations of the third aspect, the sending, by the to-be-charged apparatus, first information to the charging apparatus includes: generating, by the to-be-charged apparatus, a broadcast signal based on the first information; and sending, by the to-be-charged apparatus, the broadcast signal to the charging apparatus according to a preset frequency.

With reference to the third aspect, in some implementations of the third aspect, the sending, by the to-be-charged apparatus, the broadcast signal to the charging apparatus according to a preset frequency includes: sending, by the to-be-charged apparatus, the broadcast signal to the charging apparatus according to the preset frequency in a Bluetooth manner.

With reference to the third aspect, in some implementations of the third aspect, a type of the broadcast signal is a universally unique identification code (UUID) or service data.

With reference to the third aspect, in some implementations of the third aspect, the method further includes: obtaining, by the to-be-charged apparatus, current electric quantity information; determining, by the to-be-charged apparatus according to the current electric quantity information and the remaining electric quantity information, whether an electric quantity of the to-be-charged apparatus increases; and stopping sending, by the to-be-charged apparatus, the broadcast information if the electric quantity of the to-be-charged apparatus increases.

With reference to the third aspect, in some implementations of the third aspect, the to-be-charged apparatus is a smartwatch or a smart bracelet.

According to a fourth aspect, a charging apparatus is provided, including a unit configured to perform any one of the methods according to the first aspect. The apparatus may be an electronic device or a chip in a terminal device. The apparatus may include an obtaining unit and a processing unit.

When the apparatus is an electronic device, the processing unit may be a processor, and an input unit may be a communication interface. The terminal device may further include a memory. The memory is configured to store computer program code. When the processor executes the computer program code stored in the memory, the terminal device is enabled to perform any one of the methods according to the first aspect.

When the apparatus is a chip in a terminal device, the processing unit may be a processing unit inside the chip, and the input unit may be an output interface, a pin, a circuit, or the like. The chip may further include a memory. The memory may be a memory (for example, a register or a buffer) in the chip, or may be a memory (for example, a read-only memory or a random access memory) located outside the chip. The memory is configured to store computer program code. When the processor executes the computer program code stored in the memory, the chip is enabled to perform any one of the methods according to the first aspect.

In a possible implementation, the memory is configured to store computer program code. The processor executes the computer program code stored in the memory. When the computer program code stored in the memory is executed, the processor is configured to: receive first information sent by the to-be-charged apparatus, where the first information includes remaining electric quantity information of the to-be-charged apparatus; determine a target charging policy based on the first information, where the target charging policy is one charging policy determined from a plurality of candidate charging policies, and charging policies in the plurality of candidate charging policies have different charging rates; and charge the to-be-charged apparatus according to the target charging policy.

According to a fifth aspect, a to-be-charged apparatus is provided, including a unit configured to perform any one of the methods according to the second aspect. The apparatus may be an electronic device or a chip in a terminal device. The apparatus may include an obtaining unit and a processing unit.

When the apparatus is a terminal device, the processing unit may be a processor, and an input unit may be a communication interface. The terminal device may further include a memory. The memory is configured to store computer program code. When the processor executes the computer program code stored in the memory, the terminal device is enabled to perform any one of the methods according to the second aspect.

When the apparatus is a chip in a terminal device, the processing unit may be a processing unit inside the chip, and the input unit may be an output interface, a pin, a circuit, or the like. The chip may further include a memory. The memory may be a memory (for example, a register or a buffer) in the chip, or may be a memory (for example, a read-only memory or a random access memory) located outside the chip. The memory is configured to store computer program code. When the processor executes the computer program code stored in the memory, the chip is enabled to perform any one of the methods according to the second aspect.

In a possible implementation, the memory is configured to store computer program code. The processor executes the computer program code stored in the memory. When the computer program code stored in the memory is executed, the processor is configured to: send first information to the charging apparatus, where the first information includes remaining electric quantity information of the to-be-charged apparatus; and receive electric energy outputted by the charging apparatus according to a target charging policy, where the target charging policy is one charging policy determined by the charging apparatus based on the first information from a plurality of candidate charging policies, and charging policies in the plurality of candidate charging policies have different charging rates.

According to a sixth aspect, a computer-readable storage medium is provided. The computer-readable storage medium stores computer program code. When the computer program code is executed by a charging apparatus, the charging apparatus is enabled to perform any one of the charging methods according to the first aspect or the second aspect.

According to a tenth aspect, a computer program product is provided. The computer program product includes: computer program code. The computer program code, when run by a charging apparatus, enables the charging apparatus to perform any one of the apparatus methods according to the first aspect or the second aspect.

According to the charging method provided by this embodiment of this application, a to-be-charged apparatus sends first information including remaining electric quantity information of the to-be-charged apparatus to a charging apparatus. The charging apparatus determines a target charging policy from a plurality of candidate charging policies based on the first information. The charging apparatus outputs electric energy to the to-be-charged apparatus according to the target charging policy. In this way, the charging apparatus may flexibly determine the target charging policy from the plurality of candidate charging policies according to the remaining electric quantity information of the to-be-charged apparatus, and then output the electric energy to the to-be-charged apparatus according to the target charging policy. To be specific, charging policies of the to-be-charged apparatus are richer, and charging flexibility of the to-be-charged apparatus is improved.

**BRIEF DESCRIPTION OF DRAWINGS**

FIG. 1 is a schematic diagram of a hardware system applicable to an electronic device of this application;
FIG. 2 is a schematic diagram of an application scenario according to an embodiment of this application;
FIG. 3 is a schematic flowchart of a charging method according to an embodiment of this application;

FIG. 4 is a schematic diagram of an application scenario according to an embodiment of this application;

FIG. 5 is a schematic flowchart of another charging method according to an embodiment of this application;

FIG. 6 is a schematic flowchart of another charging method according to an embodiment of this application;

FIG. 7 is a schematic flowchart of another charging method according to an embodiment of this application;

FIG. 8 is a schematic flowchart of another charging method according to an embodiment of this application;

FIG. 9 is a schematic flowchart of another charging method according to an embodiment of this application;

FIG. 10 is a schematic flowchart of another charging method according to an embodiment of this application;

FIG. 11 is a schematic diagram of a charging apparatus according to this application;

FIG. 12 is a schematic diagram of a to-be-charged apparatus according to this application; and

FIG. 13 is a schematic diagram of an electronic device for charging according to this application.

## DESCRIPTION OF EMBODIMENTS

Technical solutions in embodiments of this application are described below with reference to the accompanying drawings in embodiments of this application. In the descriptions of embodiments of this application, "/" means "or" unless otherwise specified. For example, A/B may represent A or B. In this specification, "and/or" describes only an association relationship for describing associated objects and indicates that three relationships may exist. For example, A and/or B may indicate A alone, both A and B, and B alone. In addition, in the descriptions of embodiments of this application, "a plurality of" represents two or more.

The terms "first", "second" and "third" described below are merely intended for an objective of description, and shall not be understood as an indication or implication of relative importance or implicit indication of the quantity of indicated technical features. Therefore, a feature limited by "first", "second", or "third" may explicitly or implicitly include one or more of the features.

At present, a smart wearable device such as a sports watch or a sports bracelet is generally charged by a charging base. For the sports bracelet, the charging base generally has only two contacts. The two contacts can only perform current transmission and cannot perform data exchange. When the sports bracelet is connected to the two contacts on the charging base, the charging base outputs electric energy to the running bracelet, to charge the sports bracelet. Because the two contacts on the charging base can only perform current transmission, data exchange between the charging base and the sports bracelet cannot be implemented. Therefore, the charging base cannot obtain remaining electric quantity information of the sports bracelet. Therefore, a charging policy cannot be adjusted according to the remaining electric quantity information of the sports bracelet. Charging can only be performed in a fixed charging manner. To be specific, charging is performed at a fixed charging rate, with low flexibility.

In view of this, an embodiment of this application provides a charging method. A to-be-charged apparatus sends first information including remaining electric quantity information of the to-be-charged apparatus to a charging apparatus. The charging apparatus determines a target charging policy from a plurality of candidate charging policies based on the first information. The charging apparatus outputs electric energy to the to-be-charged apparatus according to the target charging policy. In this way, the charging apparatus may flexibly determine the target charging policy from the plurality of candidate charging policies according to the remaining electric quantity information of the to-be-charged apparatus, and then output the electric energy to the to-be-charged apparatus according to the target charging policy. To be specific, charging policies of the to-be-charged apparatus are richer, and charging flexibility of the to-be-charged apparatus is improved.

The charging method provided by this embodiment of this application may be applied to the to-be-charged apparatus, or may be applied to the charging apparatus, or may be applied to a charging system. The charging system may include the to-be-charged apparatus and the charging apparatus. The charging apparatus charges the to-be-charged apparatus in a contact charging manner, and data exchange cannot be performed between the to-be-charged apparatus and the charging apparatus through the foregoing contacts. Optionally, the to-be-charged apparatus may be an electronic device. The electronic device includes a terminal device. The terminal device may alternatively be referred to as a terminal (terminal), user equipment (user equipment, UE), a mobile station (mobile station, MS), a mobile terminal (mobile terminal, MT), or the like. The terminal device may be a mobile phone (mobile phone), a smart TV, a wearable device, a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), or the like. This embodiment of this application imposes no limitation on a specific technology and a specific device form used by the terminal device.

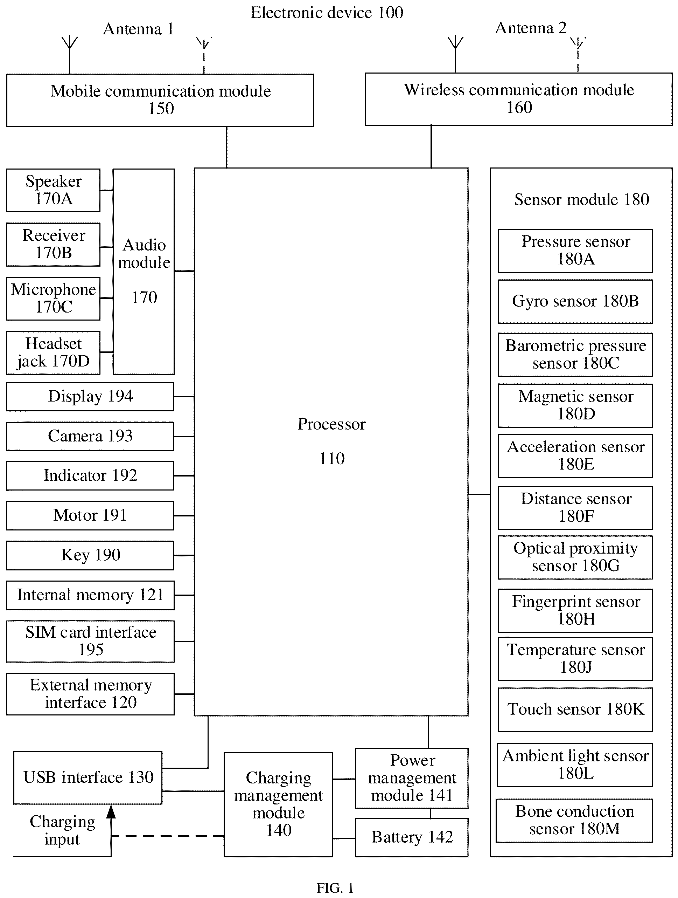

For example, FIG. 1 shows a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that an example structure in this embodiment of this application does not constitute a specific limitation on the electronic device 100. In some other embodiments of this application, the electronic device 100 may include more or fewer components than those shown in the figure, or some merged components, or some split components, or different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a timesequence signal, and control obtaining and executing of instructions.

A memory may be further disposed in the processor 110, to store instructions and data. In some embodiments, the memory in the processor 110 is a cache. The memory may store instructions or data that is recently used or cyclically used by the processor 110. If the processor 110 needs to use the instructions or data again, the processor may directly invoke the instructions or the data from the memory. Repeated access is avoided, and a waiting time of the processor 110 is reduced, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The UART interface is a universal serial data bus used for asynchronous communication. The bus may be a two-way communication bus. The bus converts to-be-transmitted data between serial communication and parallel communication. In some embodiments, the UART interface is generally configured to connect the processor 110 and the wireless communication module 160. For example, the processor 110 communicates with a Bluetooth module in the wireless communication module 160 via the UART interface, to implement a Bluetooth function. In some embodiments, the audio module 170 may transmit a broadcast signal to the wireless communication module 160 through the UART interface, to implement a function of communicating with another electronic device (for example, a charging base) through Bluetooth.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, and the like. The GPIO interface may be further configured as the I2C interface, the I2S interface, the UART interface, the MIPI, or the like.

It may be understood that a schematic interface connection relationship between the modules in embodiments of this application is merely an example for description, and constitutes no limitation on the structure of the electronic device 100. In some other embodiments of this application, the electronic device 100 may use an interface connection manner different from that in the foregoing embodiments, or use combinations of a plurality of interface connection manners.

The charging management module 140 is configured to receive a charging input from a charger. The charger may be a wireless charger, or may be a wired charger. In some embodiments of wired charging, the charging management module 140 may receive a charging input from the wired charger via the USB interface 130. In some embodiments of wireless charging, the charging management module 140 may receive a wireless charging input through a wireless charging coil of the electronic device 100. When charging the battery 142, the charging management module 140 may further supply power to the electronic device 100 by using the power management module 141.

The power management module 141 is configured to connect the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a cycle count of a battery, and a battery health state (electric leakage and impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna of the electronic device 100 may be configured to cover one or more communication bands. Different antennas may be further multiplexed to increase a utilization rate of the antennas. For example, the antenna 1 may be multiplexed as a diversity antenna of a wireless local area network. In some other embodiments, the antenna may be used in combination with a tuning switch.

The mobile communication module 150 may provide a solution to wireless communication including 2G/3G/4G/5G and the like applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the processed electromagnetic wave to the modem processor for demodulation. The mobile communication module 150 may further amplify a signal obtained after modulation by the modem processor, and the amplified signal is converted into an electromagnetic wave via the antenna 1 for radiation. In some embodiments, at least some function modules of the mobile communication module 150 may be disposed in the processor 110. In some embodiments, at least some function modules of the mobile communication module 150 may be disposed in a same device as at least some modules of the processor 110.

The modem processor may include a modulator and a demodulator. The modulator is configured to modulate a to-be-sent low-frequency baseband signal into a medium or high-frequency signal. The demodulator is configured to demodulate the received electromagnetic wave signal into a low-frequency baseband signal. Then the demodulator transmits the low-frequency baseband signal obtained through demodulation to the baseband processor for processing. The low-frequency baseband signal is processed by the baseband processor and then transmitted to an application processor. The application processor outputs a sound signal through an audio device (which is not limited to the speaker 170A, the receiver 170B, and the like), or displays an image or a video through the display 194. In some embodiments, the modem processor may be an independent device. In some other embodiments, the modem processor may be independent of the processor 110 and may be disposed in a same device as the mobile communication module 150 or another function module.

The wireless communication module 160 may provide a solution to wireless communication including a wireless local area network (wireless local area networks, WLAN) (for example, a wireless fidelity (wireless fidelity, Wi-Fi) network), bluetooth (bluetooth, BT), a global navigation satellite system (global navigation satellite system, GNSS), frequency modulation (frequency modulation, FM), near field communication (near field communication, NFC), an infrared (infrared, IR) technology, and the like applied to the electronic device 100. The wireless communication module 160 may be one or more devices into which at least one communication processing module is integrated. The wireless communications module 160 receives an electromagnetic wave via the antenna 2, performs frequency modulation and filtering on the electromagnetic wave signal, and sends the processed signal to the processor 110. The wireless communication module 160 may further receive a to-be-sent signal from the processor 110, perform frequency modulation and amplification on the to-be-sent signal, and convert an amplified signal into an electromagnetic wave for radiation via the antenna 2.

In some embodiments, in the electronic device 100, the antenna 1 is coupled to the mobile communication module 150, and the antenna 2 is coupled to the wireless communication module 160, so that the electronic device 100 may communicate with a network and another device through a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), the 5th Generation of wireless communication system (5G, the 5th Generation of wireless communication system), BT, a GNSS, a WLAN, NFC, FM, an IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite based augmentation system (satellite based augmentation systems, SBAS).

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, quantum dot light emitting diodes (quantum dot light emitting diodes, QLED), and the like. In some embodiments, the electronic device 100 may include 1 or N displays 194. N is a positive integer greater than 1.

The electronic device 100 may implement an audio function by using the audio module 170, the speaker 170A, the receiver 170B, the microphone 170C, the headset jack 170D, the application processor, and the like. For example, music playing and sound recording are implemented.

The touch sensor 180K is also referred to as a "touch panel". The touch sensor 180K may be disposed on the display 194. The touch sensor 180K and the display 194 form a touchscreen, also referred to as a "touch control screen". The touch sensor 180K is configured to detect a touch operation performed on or near the touch sensor. The touch sensor may transfer the detected touch operation to the application processor, to determine a touch event type. A visual output related to a touch operation may be provided through the display 194. In some other embodiments, the touch sensor 180K may alternatively be disposed on a surface of the electronic device 100 at a position different from that of the display 194.

The bone conduction sensor 180M may obtain a vibration signal. In some embodiments, the bone conduction sensor 180M may obtain a vibration signal of a vibrating bone block of a human body's vocal part. The bone conduction sensor 180M may also come into contact with a human pulse to receive a blood pressure beating signal. In some embodiments, the bone conduction sensor 180M may alternatively be disposed in a headset, to form a bone conduction headset. The audio module 170 may parse out a voice signal based on the vibration signal of the vibration bone of the vocal-cord part that is obtained by the bone conduction sensor 180M, to implement a voice function. The application processor may parse heart rate information based on the blood pressure pulse signal obtained by the bone conduction sensor 180M, to implement a heart rate detection function.

The key 190 includes a power-on key, a volume key, and the like. The key 190 may be a mechanical key, or may be a touch key. The electronic device 100 may receive a key input, and generate a key signal input related to user setting and functional control of the electronic device 100.

The motor 191 may generate a vibration prompt. The motor 191 may be configured for an incoming call vibration prompt or a touch vibration feedback. For example, touch operations performed on different applications (for example, photo taking and audio playing) may correspond to different vibration feedback effects. For touch operations performed in different regions of the display 194, the motor 191 may also correspond to different vibration feedback effects. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status or a power change, and may alternatively be configured to indicate a message, a missed call, a notification, and the like.

It should be noted that any electronic device mentioned in this embodiment of this application may include more or fewer modules in the electronic device 100.

A software system of the electronic device 100 may use a layered architecture, an eventdriven architecture, a micro core architecture, a micro service architecture, or a cloud architecture. This is not limited in this embodiment of this application.

The application scenarios provided by this embodiment of this application are described below in conjunction with the accompanying drawings.

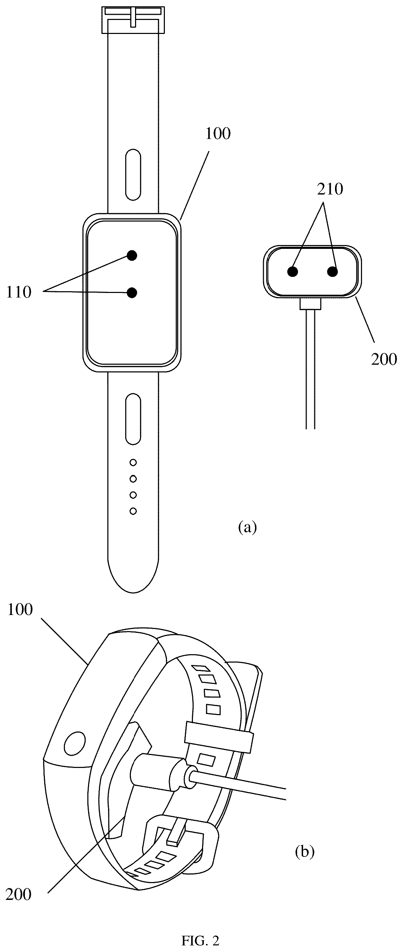

FIG. 2 is a schematic diagram of an application scenario of a charging method according to an embodiment of this application. As shown in (a) of FIG. 2, there are two charging contacts 110 on the back of a smart bracelet 100, and there are also two protruding power transmission contacts 210 on a charging base 200. The smart bracelet 100 is connected to the charging base 200 by using only two contacts, and the smart bracelet 100 cannot exchange data with the charging base 200 by using the contacts. When the charging contacts 110 on the smart bracelet 100 are in contact with the power transmission contacts 210 on the charging base 200, as shown in (b) of FIG. 2, the smart bracelet 100 sends remaining electric quantity information of the smart bracelet 100 to the charging base 200 in a wireless transmission manner. For example, the smart bracelet 100 sends the remaining electric quantity information of the smart bracelet 100 to the charging base 200 in a Bluetooth broadcast manner. Then, after receiving the remaining electric quantity information sent by the smart bracelet 100, the charging base 200 starts to output electric energy to the smart bracelet 100 by using the power transmission contacts 210.

It should be understood that an electronic device and a charging base, for example, a headset and a charging case, in a similar charging manner are also applicable to the charging method provided in this embodiment of this application, and the foregoing is merely an example.

It should be understood that the foregoing is an example of describing the application scenarios, and does not limit the application scenarios of this application.

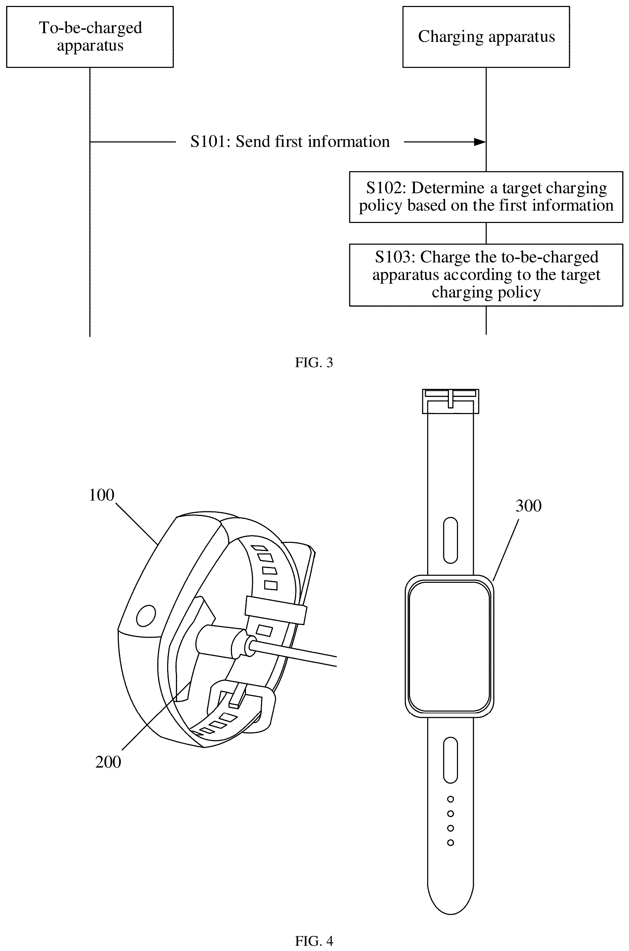

The following describes in detail the charging method in this embodiment of this application with reference to FIG. 3 to FIG. 10.

FIG. 3 is a schematic flowchart of a charging method according to an embodiment of this application. As shown in FIG. 3, the method includes the following steps.

S101: A to-be-charged apparatus sends first information to a charging apparatus.

The first information includes remaining electric quantity information of the to-be-charged apparatus.

It should be understood that the charging apparatus charges the to-be-charged apparatus in a contact charging manner. The charging apparatus may be provided with contacts shown in FIG. 2. The contacts can only perform charging and cannot perform data exchange. To be specific, data exchange cannot be performed between the charging apparatus and the to-be-charged apparatus that is charged in a contact charging manner by using contacts, and the to-be-charged apparatus cannot send the first information to the charging apparatus by using the contacts.

Generally, when the to-be-charged apparatus and the charging apparatus are connected to each other by using contacts, the to-be-charged apparatus and the charging apparatus simultaneously generate an interrupt request (Interrupt ReQuest, IRQ), i.e. an interrupt signal. At this moment, the to-be-charged apparatus obtains remaining electric quantity information thereof, and generates first information according to the remaining electric quantity information. Then, the to-be-charged apparatus sends the first information to the charging apparatus.

Optionally, the to-be-charged apparatus may broadcast the first information in a Bluetooth broadcast manner, so that the charging apparatus within Bluetooth coverage can receive the first information.

S102: The charging apparatus determines a target charging policy based on the first information.

The target charging policy is one charging policy determined based on the remaining electric quantity information from a plurality of candidate charging policies. Charging policies in the plurality of candidate charging policies have different charging rates.

For example, the plurality of candidate charging policies may include a fast-charging policy, a slow-charging policy, and a trickle-charging policy.

The fast-charging policy may be a charging policy in which an electric quantity charged per unit time is greater than an electric quantity threshold. Charging by using the fast-charging policy can quickly increase a battery level of the to-be-charged apparatus, thereby satisfying a user requirement.

The slow-charging policy may be a charging policy in which the electric quantity charged per unit time is less than the electric quantity threshold. Charging by using the slow-charging policy can protect a battery of the to-be-charged apparatus, thereby prolonging the life of the battery of the to-be-charged apparatus.

The trickle-charging policy may be a charging policy in which the electric quantity charged per unit time is less than the electric quantity threshold and the electric quantity charged per unit time is greater than the electric quantity threshold when the battery level is increased to a preset level value. By using the trickle-charging policy, the battery is protected first when the battery level is ultra-low, and when the battery level increases to the preset level value so that fast-charging does not damage the battery, the battery level is quickly increased in a fast-charging manner, thereby satisfying the user requirement.

After receiving first information sent by the to-be-charged apparatus, the charging apparatus may select one charging policy as a target charging policy according to remaining electric quantity information included in the first information. For example, a correspondence between remaining electric quantities and charging policies may be used, and a charging policy corresponding to the remaining electric quantity information is selected as the target charging policy.

For example, if the remaining electric quantity indicated by the remaining electric quantity information is ultra-low, the trickle-charging policy may be used as the target charging policy. If the remaining electric quantity indicated by the remaining electric quantity information is low, the fast-charging policy may be used as the target charging policy. If the remaining electric quantity indicated by the remaining electric quantity information is high, the slow-charging policy may be used as the target charging policy.

It should be understood that the remaining electric quantity information may be a percentage of a total battery level, or may be a remaining battery capacity of the battery. This is not limited in this embodiment of this application.

An example in which the remaining electric quantity information is a percentage of a total battery level is used for description. In the process of determining whether the remaining electric quantity indicated by the remaining electric quantity information is ultra-low, low, or high, a first electric quantity threshold used is also described by using the percentage of the total battery level.

When the remaining electric quantity indicated by the remaining electric quantity information is less than the first electric quantity threshold, it may be determined that the remaining electric quantity indicated by the remaining electric quantity information is ultra-low. For example, the first electric quantity threshold is 20%. When the remaining electric quantity indicated by the remaining electric quantity information is 12%, the remaining electric quantity indicated by the remaining electric quantity information is ultra-low.

When the remaining electric quantity indicated by the remaining electric quantity information is greater than or equal to the first electric quantity threshold and is less than a second electric quantity threshold, it may be determined that the remaining electric quantity indicated by the remaining electric quantity information is low. For example, the first electric quantity threshold is 20% and the second electric quantity threshold is 60%. When the remaining electric quantity indicated by the remaining electric quantity information is 45%, the remaining electric quantity indicated by the remaining electric quantity information is low.

When the remaining electric quantity indicated by the remaining electric quantity information is greater than or equal to the second electric quantity threshold, it may be determined that the remaining electric quantity indicated by the remaining electric quantity information is high. For example, the second electric quantity threshold is 60%. When the remaining electric quantity indicated by the remaining electric quantity information is 80%, the remaining electric quantity indicated by the remaining electric quantity information is high.

In a case that the remaining electric quantity indicated by the remaining electric quantity information of the to-be-charged apparatus is ultra-low, a trickle-charging policy may be used as the target charging policy. In this way, the battery can be protected first, and when the battery level increases to a preset level value, the battery can be quickly charged without being damaged, and then the battery level is quickly increased in a fast-charging manner, to meet a user requirement.

In a case that the remaining electric quantity indicated by the remaining electric quantity information of the to-be-charged apparatus is low, a fast-charging policy may be used as the target charging policy. In this way, the battery level of the to-be-charged apparatus can be quickly increased, to meet the user requirement.

In a case that the remaining electric quantity indicated by the remaining electric quantity information of the to-be-charged apparatus is high, a slow-charging policy may be used as the target charging policy. In this way, the battery of the to-be-charged apparatus can be protected, and the life of the battery of the to-be-charged apparatus can be prolonged.

S103: The charging apparatus charges the to-be-charged apparatus according to the target charging policy.

According to the charging method provided by this embodiment of this application, a to-be-charged apparatus sends first information including remaining electric quantity information of the to-be-charged apparatus to a charging apparatus. The charging apparatus determines a target charging policy from a plurality of candidate charging policies based on the first information. The charging apparatus outputs electric energy to the to-be-charged apparatus according to the target charging policy. In this way, the charging apparatus may flexibly determine the target charging policy from the plurality of candidate charging policies according to the remaining electric quantity information of the to-be-charged apparatus, and then output the electric energy to the to-be-charged apparatus according to the target charging policy. To be specific, charging policies of the to-be-charged apparatus are richer, and charging flexibility of the to-be-charged apparatus is improved.

In a possible case, one charging apparatus may charge a plurality of to-be-charged apparatuses. For example, as shown in FIG. 4, the charging apparatus 200 may charge a smart bracelet 100 and a smart bracelet 300. In this case, to prevent the charging apparatus 200 from frequently selecting the target charging policy and increase a calculation load of the charging apparatus 200, the charging apparatus may find the target charging policy from the plurality of candidate charging policies only after determining that the to-be-charged apparatus matches the charging apparatus.

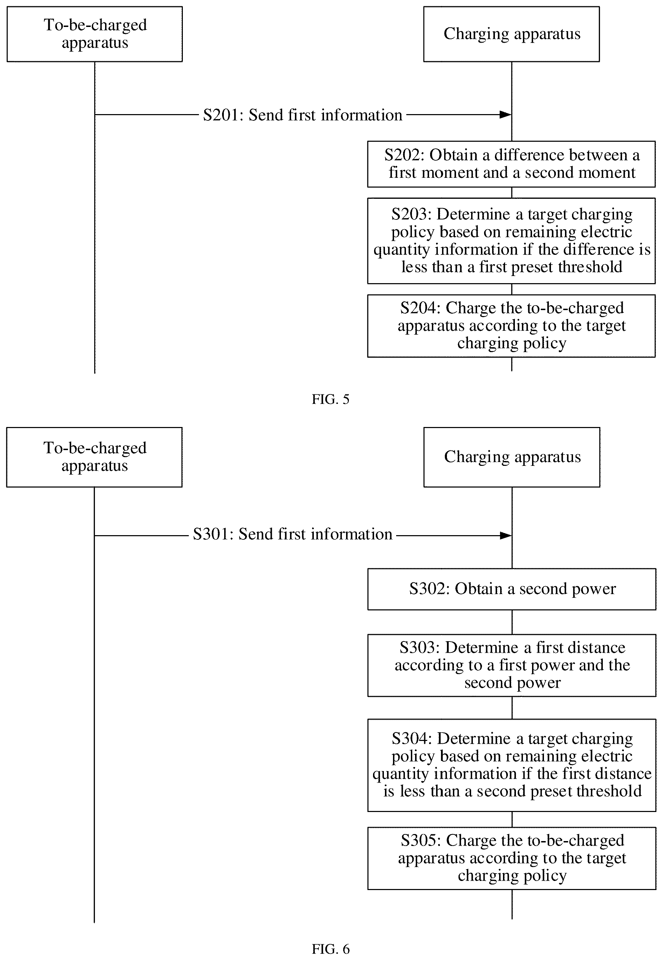

For example, the charging apparatus may determine, according to a moment at which the interrupt signal is generated, whether the to-be-charged apparatus matches the charging apparatus, as shown in an embodiment shown in FIG. 5.

For example, the charging apparatus may determine, according to a transmitted power at which the to-be-charged apparatus sends the first signal and a received power at which the charging apparatus receives the first signal, whether the to-be-charged apparatus matches the charging apparatus, as shown in an embodiment shown in FIG. 6.

FIG. 5 is a schematic flowchart of a charging method according to another embodiment of this application. As shown in FIG. 5, the method includes the following steps.

S201: A to-be-charged apparatus sends first information to a charging apparatus.

The first information includes remaining electric quantity information of the to-be-charged apparatus and a first moment, where the first moment is a moment which is recorded by the to-be-charged apparatus and at which an interrupt signal is generated, and the interrupt signal is a signal generated by touching when the charging apparatus charges the to-be-charged apparatus.

It should be understood that generally, when the to-be-charged apparatus and the charging apparatus are connected to each other by using contacts, the to-be-charged apparatus and the charging apparatus simultaneously generate an IRQ, i.e. an interrupt signal. At this moment, the to-be-charged apparatus obtains remaining electric quantity information thereof and a moment at which the to-be-charged apparatus generates the IRQ, i.e. a first moment. Then, the to-be-charged apparatus generates first information according to the remaining electric quantity information and the first moment.

S202: The charging apparatus obtains a difference between the first moment and a second moment.

The second moment is a moment which is recorded by the charging apparatus and at which the interrupt signal is generated.

It should be understood that at a moment when the charging apparatus starts to charge the to-be-charged apparatus and the two apparatuses are in contact through contacts, the to-be-charged apparatus and the charging apparatus simultaneously generate the IRQ. However, due to a difference between processing speeds of the to-be-charged apparatus and the charging apparatus, a moment at which the IRQ is generated and recorded by the to-be-charged apparatus is different from a moment at which the IRQ is generated and recorded by the charging apparatus. Therefore, the first moment at which the to-be-charged apparatus records the IRQ is different from the second moment at which the charging apparatus records the IRQ.

After receiving the first information, the charging apparatus parses out the first moment from the first information, and then the charging apparatus may invoke, from a memory of the charging apparatus, the recorded moment at which the IRQ is generated, i.e. the second moment. Then, the charging apparatus may obtain a difference between the first moment and the second moment.

S203: The charging apparatus determines the target charging policy based on the remaining electric quantity information in a case that the difference is less than a first preset threshold.

In a case that the difference between the first moment and the second moment is less than the first preset threshold, it indicates that the interrupt signal generated by the to-be-charged apparatus and the charging apparatus is generated based on a same charging contact. To be specific, the to-be-charged apparatus and the charging apparatus match each other.

For example, as shown in FIG. 4, the charging apparatus 200 may charge a smart bracelet 100 and a smart bracelet 300. The smart bracelet 100 is connected to the charging apparatus 200 through contacts. To be specific, the smart bracelet 100 matches the charging apparatus 200 at a current moment.

In a case that the difference between the first moment and the second moment is less than the first preset threshold, to be specific, in a case that the charging apparatus matches the to-be-charged apparatus, the charging apparatus obtains the remaining electric quantity information from the first information, and then determines the target charging policy based on the remaining electric quantity information. For a specific determining process, refer to the descriptions in S102. Details are not described herein again.

S204: The charging apparatus outputs electric energy to the to-be-charged apparatus according to the target charging policy.

According to the charging method provided in this embodiment of this application, a to-be-charged apparatus sends first information including remaining electric quantity information of the to-be-charged apparatus and a first moment to a charging apparatus. The charging apparatus determines a target charging policy from a plurality of candidate charging policies in a case that a difference between the first moment and a second moment in the first information is less than a first preset threshold. The charging apparatus outputs electric energy to the to-be-charged apparatus according to the target charging policy. The first moment is a moment which is recorded by the to-be-charged apparatus and at which an interrupt signal is generated. The interrupt signal is a signal generated by touching when the charging apparatus charges the to-be-charged apparatus. The second signal is a moment which is recorded by the charging apparatus and at which the interrupt signal is generated. If the difference between the first moment and the second moment is less than the first preset threshold, it indicates that the to-be-charged apparatus and the charging apparatus simultaneously generate the interrupt signal. To be specific, the to-be-charged apparatus and the charging apparatus have been matched for charging, and charging may be started. In this way, the charging apparatus may flexibly determine the target charging policy from the plurality of candidate charging policies according to the remaining electric quantity information of the to-be-charged apparatus only in a case that the to-be-charged apparatus and the charging apparatus have been matched for charging, and then output electric energy to the to-be-charged apparatus according to the target charging policy, thereby reducing a calculation load of the charging apparatus.

FIG. 6 is a schematic flowchart of a charging method according to another embodiment of this application. As shown in FIG. 6, the method includes the following steps.

S301: A to-be-charged apparatus sends first information to a charging apparatus.

The first information includes remaining electric quantity information of the to-be-charged apparatus and a first power, where the first power is a transmitted power at which the to-be-charged apparatus sends the first information.

S302: The charging apparatus obtains a second power.

The second power is a received power at which the charging apparatus receives the first information.

S303: The charging apparatus determines a first distance according to a first power and the second power.

The first distance is a distance between the charging apparatus and the to-be-charged apparatus.

It should be understood that transmission of a signal in air is lost. Therefore, the distance between the to-be-charged apparatus and the charging apparatus may be determined according to a first formula, the first power, and the second power. The first formula includes:

$$Pr=-32.44-20lg(d)-20lg(f),$$

where d represents a transmission distance, Pr represents the difference between the first power and the second power, and f represents a frequency of a carrier signal, i.e. the frequency of the carrier signal for transmitting a first signal.

After the first power and the second power are obtained, the difference Pr between the first power and the second power may be obtained first, the frequency of the carrier signal when the to-be-charged apparatus sends the first signal to the charging apparatus is obtained at the same time, and then the distance d between the to-be-charged apparatus and the charging apparatus is calculated by using the first formula.

S304: The charging apparatus determines a target charging policy based on remaining electric quantity information when the first distance is less than a second preset threshold.

In a case that the first distance is less than the second preset threshold, it indicates that the to-be-charged apparatus and the charging apparatus are relatively close to each other and are connected to each other by using contacts. The charging apparatus may start to output electric energy to the to-be-charged apparatus.

For example, the charging apparatus 200 may charge a smart bracelet 100 and a smart bracelet 300. As shown in FIG. 4, a distance between the smart bracelet 100 and the charging apparatus 200 is less than the second preset threshold, and a distance between the smart bracelet 300 and the charging apparatus 200 is greater than the second preset threshold. To be specific, at a current moment, the charging apparatus 200 needs to output electric energy to the smart bracelet 100.

In a case that the difference between the first moment and the second moment is less than the first preset threshold, to be specific, in a case that the charging apparatus matches the to-be-charged apparatus, the charging apparatus obtains the remaining electric quantity information from the first information, and then determines the target charging policy based on the remaining electric quantity information. For a specific determining process, refer to the descriptions in S102. Details are not described herein again.

S305: The charging apparatus outputs electric energy to the to-be-charged apparatus according to the target charging policy.

According to the charging method provided in this embodiment of this application, a to-be-charged apparatus sends first information including remaining electric quantity information and transmitted power (first power) for sending the first information to a charging apparatus. The charging apparatus obtains a received power (second power) at which the charging apparatus receives the first information, then determines a distance (first distance) between an electronic device and the charging apparatus according to the first power and the second power, and determines a target charging policy from a plurality of candidate charging policies in a case that the first distance is less than a second preset threshold. The charging apparatus outputs electric energy to the to-be-charged apparatus according to the target charging policy. In a case that the first distance is less than the second preset threshold, it indicates that the distance between the to-be-charged apparatus and the charging apparatus is relatively small. In this way, the charging apparatus may output the electric energy to the to-be-charged apparatus. Only in this case, the charging apparatus flexibly determines the target charging policy from the plurality of candidate charging policies according to the remaining electric quantity information of the to-be-charged apparatus, and then outputs the electric energy to the to-be-charged apparatus according to the target charging policy, thereby reducing a calculation load of the charging apparatus.

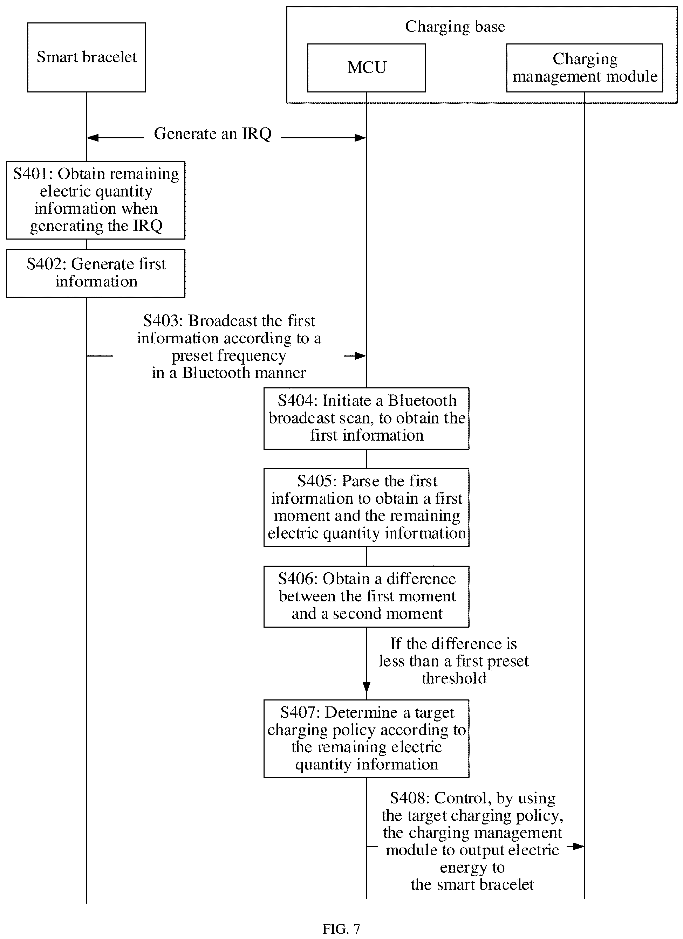

Generally, a charging base for charging a smart bracelet does not have a data processing capability. Therefore, in a charging system formed by the smart bracelet and the charging base, a microcontroller unit (Microcontroller Unit, MCU) may be added to the charging base, and a target charging policy is determined by the MCU. The following provides a detailed description based on an embodiment shown in FIG. 7.

FIG. 7 is a schematic flowchart of another charging method according to an embodiment of this application. As shown in FIG. 7, the method includes the following steps.

S401: A smart bracelet obtains remaining electric quantity information when generating an IRQ.

S402: The smart bracelet generates first information.

The first information includes the remaining electric quantity information and a first moment.

Optionally, a type of the first information is a universally unique identification code (UUID) or service data.

The first information includes an IRQ-time-offset, an IRQ-time-threshold, and a battery level. The IRQ-time-offset is equivalent to the first moment, and the battery level is equivalent to the remaining electric quantity information.

S403: The smart bracelet broadcasts the first information according to a preset frequency in a Bluetooth manner.

According to the charging method provided in this embodiment of this application, in a process in which a smart bracelet sends first information to a charging base, the first information is broadcast according to a preset frequency in a Bluetooth manner. In this way, the charging base does not need to send a request for obtaining the first information to the smart bracelet, and the smart bracelet can automatically send the first information for multiple times, thereby improving reliability that the charging base can receive the first information, and further improving reliability that the charging base determines a target charging policy based on the first information.

S404: An MCU of a charging base initiates a Bluetooth broadcast scan, to obtain the first information.

Optionally, a filter of the charging base during the Bluetooth broadcast scan is the UUID or the service data.

S405: The MCU of the charging base parses the first information to obtain a first moment and the remaining electric quantity information.

The MCU of the charging base may parse the first information to obtain a BLE-IRQ-time-offset and a BLE-IRQ-time-threshold. The BLE-IRQ-time-offset is the first moment, and the BLE-IRQ-time-threshold is a difference between a moment at which the first information is sent and the first moment. It should be understood that generally, when information is sent, a difference between a moment at which the information is sent and a moment is recorded, so that after receiving the information, a receiving device performs time comparison based on the foregoing difference. The difference sent in this embodiment of this application is the BLE-IRQ-time-threshold.

S406: The MCU of the charging base obtains a difference between the first moment and a second moment.

If the difference between the first moment and the second moment is less than a first preset threshold, S407 is performed.

The second moment is a moment at which the charging base records the IRQ.

It should be understood that different to-be-charged apparatuses record time in different manners. Some to-be-charged apparatuses record time in a 24-hour manner, and some to-be-charged apparatuses record time in a manner of recording a value of a counter. Therefore, when the charging base obtains the difference between the first moment and the second moment, timing manners of the smart bracelet and the charging base need to be unified.

For example, the charging base records time in the manner of recording a value of a counter, and the smart bracelet records time in the 24-hour manner. When receiving the first information, the charging base records a first counting value of the counter at a current moment, and then subtracts a second counting value IRQ-time, i.e. a counting value of the counter recorded by the charging base when the interrupt signal is generated. The obtained difference is configured for calculating the difference between the first moment and the second moment.

For example, the first moment BLE-IRQ-time-offset is a moment recorded in the 24-hour manner, and the second moment is a moment recorded in the counting value of the counter. When receiving the first information, the charging base obtains a moment at which the first information is received, and obtains a local-IRQ-time-offset by subtracting the second counting value IRQ-time from the moment. The BLE-IRQ-time-offset is subtracted from the local-IRQ-time-offset to obtain a difference. If the difference obtained by subtracting the BLE-IRQ-time-offset from the local-IRQ-time-offset is less than the BLE-IRQ-time-threshold, it indicates that the difference between the first moment and the second moment is less than the first preset threshold.

If the difference between the first moment and the second moment is less than the first preset threshold, S407 is performed.

S407: The MCU of the charging base determines a target charging policy according to the remaining electric quantity information.

It should be understood that a conventional charging base generally has no data processing capability, and therefore, the first information sent by the smart bracelet cannot be processed. In this embodiment of this application, an MCU is added to the charging base, and the first information is processed by using the MCU, to obtain the target charging policy.

S408: The MCU of the charging base controls, by using the target charging policy, a charging management module to output electric energy to the smart bracelet.

According to the charging method provided in this embodiment of this application, a smart bracelet sends first information including remaining electric quantity information to a charging base. An MCU in the charging base determines, based on the first information, a target charging policy from a plurality of candidate charging policies. Then, the MCU in the charging base controls, by using the target charging policy, a charging management module to charge the smart bracelet. Because a conventional charging base does not have a data processing function, in this embodiment of this application, the MCU is added to the charging base, so that the charging base can process the first information through the MCU, and select the target charging policy from the plurality of candidate charging policies based on the first information, thereby enriching charging policies of the smart bracelet and improving charging flexibility of the smart bracelet.

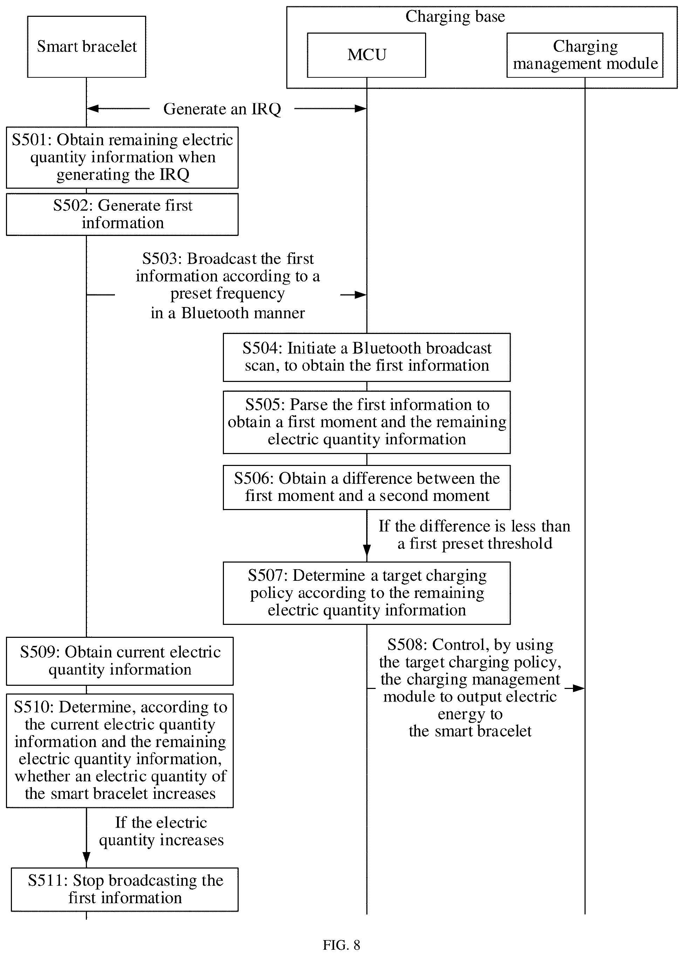

In a possible case, when detecting that the electric quantity changes, the smart bracelet may stop sending a Bluetooth broadcast to the outside, so that the charging base cannot determine the target charging policy according to the first information, and a calculation load of the charging base can be reduced. The following provides a detailed description based on an embodiment shown in FIG. 8.

FIG. 8 is a schematic flowchart of a charging method according to another embodiment of this application. As shown in FIG. 8, the method includes the following steps.

S501: A smart bracelet obtains remaining electric quantity information.

S502: The smart bracelet generates first information.

The first information includes the remaining electric quantity information and a first moment.

Optionally, a type of the first information is a universally unique identification code (UUID) or service data.

The first information includes an IRQ-time-offset, an IRQ-time-threshold, and a battery level. The IRQ-time-offset is equivalent to the first moment, and the battery level is equivalent to the remaining electric quantity information.

S503: The smart bracelet broadcasts the first information according to a preset frequency in a Bluetooth manner.

S504: An MCU of a charging base initiates a Bluetooth broadcast scan, to obtain the first information.

Optionally, a filter of the charging base during the Bluetooth broadcast scan is the UUID or the service data.

S505: The MCU of the charging base parses the first information to obtain a first moment and the remaining electric quantity information.

The MCU of the charging base may parse the first information to obtain a BLE-IRQ-time-offset and a BLEIRQ-time-threshold. The BLE-IRQ-time-offset is the first moment.

S506: The MCU of the charging base obtains a difference between the first moment and a second moment, and in a case that the difference between the first moment and the second moment is less than a first preset threshold, S507 is performed.

S507: The MCU of the charging base determines a target charging policy according to the remaining electric quantity information.

S508: The MCU of the charging base controls, according to the target charging policy, a charging management module to output electric energy to the smart bracelet.

S509: The smart bracelet obtains current electric quantity information.

S510: The smart bracelet determines, according to the current electric quantity information and the remaining electric quantity information, whether an electric quantity of the smart bracelet increases.

For example, if a value obtained by subtracting the remaining electric quantity information from the current electric quantity information is a positive number, it indicates that the electric quantity of the smart bracelet is increasing.

S511: The smart bracelet stops broadcasting the first information if the electricity quantity of the smart bracelet increases.

According to the charging method provided in this embodiment of this application, a smart bracelet sends first information including remaining electric quantity information to a charging base. An MCU in the charging base determines, based on the first information, a target charging policy from a plurality of candidate charging policies. Then, the MCU in the charging base controls, by using the target charging policy, a charging management module to charge the smart bracelet. Then, the smart bracelet can further continuously obtain current electric quantity information, and determine, in real time according to the current electric quantity information and the remaining electric quantity information, whether an electric quantity of the smart bracelet is increasing. If the electric quantity of the smart bracelet is increasing, it indicates that the charging base already starts to charge the smart bracelet. Therefore, the smart bracelet stops broadcasting the first information, so that the charging base does not need to continue to determine the target charging policy according to the first information, thereby avoiding a case that frequent determining of the target charging policy according to the first information by the charging base occupies calculation power of the charging base.

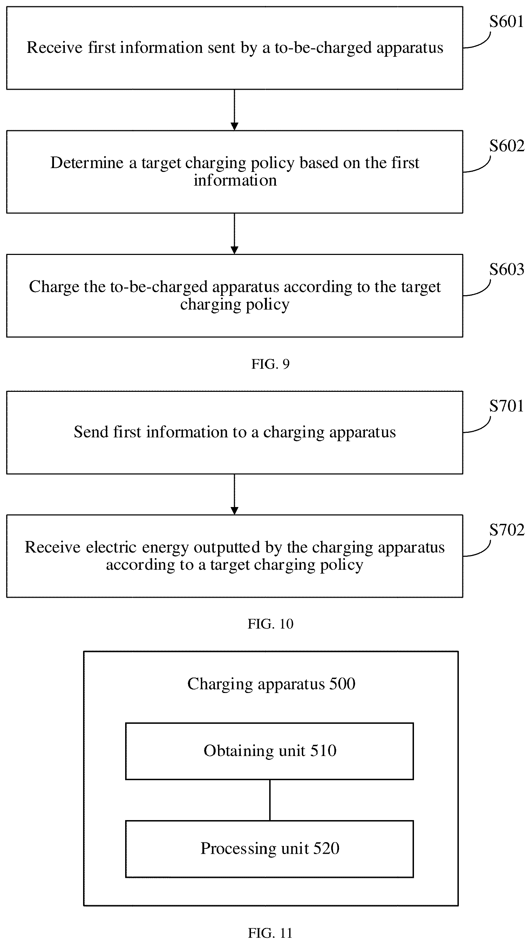

FIG. 9 is a schematic flowchart of a charging method according to an embodiment of this application. The method is applied to a charging apparatus. The charging apparatus charges a to-be-charged apparatus in a contact charging manner. As shown in FIG. 9, the method includes the following steps.

S601: Receive first information sent by a to-be-charged apparatus.

The first information includes remaining electric quantity information of the to-be-charged apparatus.

S602: Determine a target charging policy based on the first information.

The target charging policy is one charging policy determined from a plurality of candidate charging policies, and charging policies in the plurality of candidate charging policies have different charging rates.

S603: Charge the to-be-charged apparatus according to the target charging policy.

A charging method provided by this embodiment of this application is applied to a charging apparatus. The charging apparatus charges a to-be-charged apparatus in a contact charging manner. The method includes: receiving first information that is sent by the to-be-charged apparatus and includes remaining electric quantity information of the to-be-charged apparatus; determining a target charging policy from a plurality of candidate charging policies based on the first information; and then outputting electric energy to the to-be-charged apparatus according to the target charging policy. In this way, the charging apparatus may flexibly determine the target charging policy from the plurality of candidate charging policies according to the remaining electric quantity information of the to-be-charged apparatus, and then output the electric energy to the to-be-charged apparatus according to the target charging policy. To be specific, charging policies of the to-be-charged apparatus are richer, and charging flexibility of the to-be-charged apparatus is improved.

FIG. 10 is a schematic flowchart of a charging method according to an embodiment of this application. The method is applied to a to-be-charged apparatus. The to-be-charged apparatus is charged by a charging apparatus using a contact charging method. As shown in FIG. 10, the method includes the following steps.

S701: Send first information to the charging apparatus.

The first information includes remaining electric quantity information of the to-be-charged apparatus.

S702: Receive electric energy outputted by the charging apparatus according to a target charging policy.

The target charging policy is one charging policy determined by the charging apparatus based on the first information from a plurality of candidate charging policies, and charging policies in the plurality of candidate charging policies have different charging rates.

Implementation principles and beneficial effects of the charging method provided by this embodiment of this application are similar to the foregoing embodiments. Details are not described herein again.

It should be understood that although steps in the flowchart in the foregoing embodiments are sequentially displayed according to indications of the arrows, these steps are not necessarily sequentially performed in the order indicated by the arrows. Unless otherwise explicitly specified in this application, execution of the steps is not strictly limited, and the steps may be performed in other sequences. Moreover, at least some of the steps in the flowchart may include a plurality of sub-steps or a plurality of stages. The sub-steps or stages are not necessarily performed at the same moment but may be performed at different moments. The sub-steps or stages are not necessarily performed sequentially, but may be performed in turn or alternately with another step or at least some of sub-steps or stages of the another step.

It may be understood that to implement the foregoing functions, the electronic device includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions of each particular application with reference to the embodiments, but it should not be considered that the implementation goes beyond the scope of this application.

In this embodiment of this application, function modules of the electronic device may be divided based on the foregoing method example. For example, each function module may be divided according to each function, or two or more functions may be integrated into one module. It should be noted that module division in this embodiment of this application is an example, and is merely logical function division. In actual implementation, there may be another division manner. It should be noted that, a name of a module in this embodiment of this application is an example, and the name of the module is not limited in actual implementation.

FIG. 11 is a schematic diagram of a structure of a charging apparatus according to an embodiment of this application.

It should be understood that a charging apparatus 500 may perform the charging method shown in FIG. 3 to FIG. 10. The charging apparatus 500 includes: an obtaining unit 510 and a processing unit 520.

The obtaining unit 510 is configured to receive first information sent by a to-be-charged apparatus, where the first information includes remaining electric quantity information of the to-be-charged apparatus.

The processing unit 520 is configured to determine a target charging policy based on the first information, where the target charging policy is one charging policy determined from a plurality of candidate charging policies, and charging policies in the plurality of candidate charging policies have different charging rates.

The processing unit 520 is configured to charge the to-be-charged apparatus according to the target charging policy.

In an embodiment, the first information further includes a first moment, where the first moment is a moment which is recorded by the to-be-charged apparatus and at which an interrupt signal is generated, and the interrupt signal is a signal generated by touching when the charging apparatus charges the to-be-charged apparatus. The processing unit 520 is configured to: obtain a difference between the first moment and a second moment, where the second moment is a moment which is recorded by the charging apparatus and at which the interrupt signal is generated; and determine the target charging policy based on the remaining electric quantity information if the difference is less than a first preset threshold.

In an embodiment, the first information further includes a first power, where the first power is a transmitted power at which the to-be-charged apparatus sends the first information. The processing unit 520 is configured to: obtain a second power, where the second power is a received power at which the charging apparatus receives the first information; determine a first distance based on the first power and the second power, where the first distance is a distance between the charging apparatus and the to-be-charged apparatus; and determine the target charging policy based on the remaining electric quantity information if the first distance is less than a second preset threshold.

In an embodiment, the processing unit 520 is a microcontroller unit (MCU).

In an embodiment, the charging apparatus further includes a charging management module. The MCU controls, by using the target charging policy, the charging management module to charge the to-be-charged apparatus.

The charging apparatus provided by this embodiment is configured to perform the charging method in the foregoing embodiments, with similar technical principles and technical effects. Details are not described herein again.

It should be noted that the charging apparatus 500 is represented in a form of a functional unit. The term "unit" here may be implemented in a form of software and/or hardware. This is not specifically limited.

For example, the "unit" may be a software program, a hardware circuit, or a combination of the software program and the hardware circuit for implementing the foregoing functions. The hardware circuit may include an application specific integrated circuit (application specific integrated circuit, ASIC), an electronic circuit, a processor (for example, a shared processor, a dedicated processor, or a packet processor) configured to execute one or more software or firmware programs and a memory, a combined logic circuit, and/or another appropriate component that supports the described functions.

Therefore, the units of each example described in this embodiment of this application may be implemented by electronic hardware, or a combination of computer software and electronic hardware. Whether the functions are executed in a mode of hardware or software depends on particular applications and design constraint conditions of the technical solutions. A person skilled in the art may use different methods to implement the described functions for each particular application, but it should not be considered that the implementation goes beyond the scope of this application.

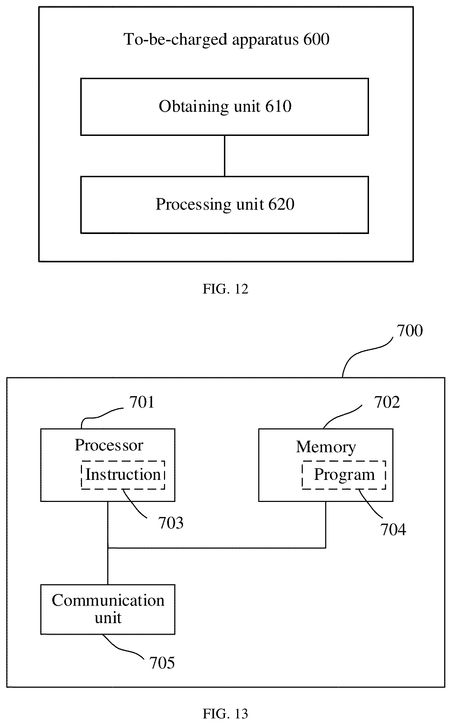

FIG. 12 is a schematic diagram of a structure of a to-be-charged apparatus according to an embodiment of this application.

It should be understood that a to-be-charged apparatus 600 may perform the charging method shown in FIG. 3 to FIG. 10. The charging apparatus 600 includes: an obtaining unit 610 and a processing unit 620.

The processing unit 620 is configured to send first information to a charging apparatus, where the first information includes remaining electric quantity information of the to-be-charged apparatus.

The processing unit 620 is configured to receive electric energy outputted by the charging apparatus according to a target charging policy, where the target charging policy is one charging policy determined by the charging apparatus based on the first information from a plurality of candidate charging policies, and charging policies in the plurality of candidate charging policies have different charging rates.

In an embodiment, the processing unit 620 is configured to: generate a broadcast signal based on the first information; and send the broadcast signal to the charging apparatus according to a preset frequency.

In an embodiment, the processing unit 620 is configured to send the broadcast signal to the charging apparatus according to the preset frequency in a Bluetooth manner.

In an embodiment, a type of the broadcast signal is a universally unique identification code (UUID) or service data.

In an embodiment, the processing unit 620 is configured to: obtain current electric quantity information; determine, according to the current electric quantity information and the remaining electric quantity information, whether an electric quantity of the to-be-charged apparatus increases; and stop sending the broadcast information if the electric quantity of the to-be-charged apparatus increases.

In an embodiment, the to-be-charged apparatus is a smartwatch or a smart bracelet.

The charging apparatus provided by this embodiment is configured to perform the charging method in the foregoing embodiments, with similar technical principles and technical effects. Details are not described herein again.

It should be noted that the to-be-charged apparatus 600 is represented in a form of a functional unit. The term "unit" here may be implemented in a form of software and/or hardware. This is not specifically limited.

For example, the "unit" may be a software program, a hardware circuit, or a combination of the software program and the hardware circuit for implementing the foregoing functions. The hardware circuit may include an application specific integrated circuit (application specific integrated circuit, ASIC), an electronic circuit, a processor (for example, a shared processor, a dedicated processor, or a packet processor) configured to execute one or more software or firmware programs and a memory, a combined logic circuit, and/or another appropriate component that supports the described functions.

Therefore, the units of each example described in this embodiment of this application may be implemented by electronic hardware, or a combination of computer software and electronic hardware. Whether the functions are executed in a mode of hardware or software depends on particular applications and design constraint conditions of the technical solutions. A person skilled in the art may use different methods to implement the described functions for each particular application, but it should not be considered that the implementation goes beyond the scope of this application.

FIG. 13 is a schematic diagram of a structure of an electronic device according to this application. A dotted line in FIG. 13 indicates that a unit or a module is optional. An electronic device 700 may be configured to implement the charging method described in the foregoing method embodiments.

The electronic device 700 includes one or more processors 701. The one or more processors 701 may support the electronic device 700 to implement the charging method in the foregoing method embodiments. The processor 701 may be a general-purpose processor, a dedicated processor, or the like. For example, the processor 701 may be a central processing unit (central processing unit, CPU), a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like.

The processor 701 may be configured to control the electronic device 700, execute a software program, and process data of the software program. The electronic device 700 may further include a communication unit 705, configured to implement input (receiving) and output (sending) of signals.

For example, the electronic device 700 may be a chip, and the communication unit 705 may be an input and/or output circuit of the chip, or the communication unit 705 may be a communication interface of the chip. The chip may be used as a component of a terminal device or another electronic device.

For another example, the electronic device 700 may be a terminal device, and the communication unit 705 may be a transceiver of the terminal device, or the communication unit 705 may be a transceiver circuit of the terminal device.

The electronic device 700 may include one or more memories 702 having a program 704 stored therein. The program 704 may be run by the processor 701 to generate instructions 703, and the processor 701 is enabled to perform the impedance matching method described in the foregoing method embodiments according to the instructions 703.

Optionally, the memory 702 may further store data. Optionally, the processor 701 may further read the data stored in the memory 702. The data may be stored in a same storage address as the program 704, or the data may be stored in a different storage address from the program 704.

The processor 701 and the memory 702 may be disposed separately or integrated together, for example, integrated on a system on chip (system on chip, SOC) of the terminal device.

For example, the memory 702 may be configured to store a related program 704 of the charging method provided in this embodiment of this application. The processor 701 may be configured to invoke the related program 704 of the charging method stored in the memory 702 when performing charging, and perform the charging method according to this embodiment of this application. The method includes: receiving first information sent by the to-be-charged apparatus, where the first information includes remaining electric quantity information of the to-be-charged apparatus; determining a target charging policy based on the first information, where the target charging policy is one charging policy determined from a plurality of candidate charging policies, and charging policies in the plurality of candidate charging policies have different charging rates; and charging the to-be-charged apparatus according to the target charging policy.

For example, the memory 702 may be configured to store a related program 704 of the charging method provided in this embodiment of this application. The processor 701 may be configured to invoke the related program 704 of the charging method stored in the memory 702 when performing charging, and perform the charging method according to this embodiment of this application. The method includes: sending first information to the charging apparatus, where the first information includes remaining electric quantity information of the to-be-charged apparatus; and receiving electric energy outputted by the charging apparatus according to a target charging policy, where the target charging policy is one charging policy determined by the charging apparatus based on the first information from a plurality of candidate charging policies, and charging policies in the plurality of candidate charging policies have different charging rates.

This application further provides a computer program product. When the computer program product is executed by the processor 701, the charging method according to any method embodiment of this application is implemented.

The computer program product may be stored in the memory 702, and may be, for example, the program 704. Processing processes such as preprocessing, compilation, assembling, and linking are performed on the program 704, so that the program is finally converted into an executable object file that can be executed by the processor 701.

This application further provides a computer-readable storage medium. The computer-readable storage medium has a computer program stored therein. When the computer program is executed by a computer, the charging method according to any method embodiment of this application is implemented. The computer program may be a high-level language program or an executable object program.

The computer-readable storage medium is, for example, the memory 702. The memory 702 may be a volatile memory or a nonvolatile memory, or the memory 702 may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In this application, "at least one" refers to one or more and "a plurality of" refers to two or more. "At least one of the following items (pieces)" or a similar expression thereof refers to any combination of these items, including a single item (piece) or any combination of a plurality of items (pieces). For example, at least one of a, b, or c may represent: a, b, c, a-b, a-c, b-c, or a-b-c, where a, b, and c may be singular or plural.

It should be understood that sequence numbers of the foregoing processes do not mean execution sequences in the embodiments of this application. The performing sequences of the processes should be determined based on functions and internal logic of the processes, and should not constitute any limitation on the implementation processes of the embodiments of this application.

A person of ordinary skill in the art may be aware that the exemplary units and algorithm steps described with reference to embodiments disclosed in this specification can be implemented in electronic hardware, or a combination of computer software and electronic hardware. Whether the functions are executed in a mode of hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing described apparatus embodiment is merely an example. For example, the unit division is merely logical function division, and there may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and the components displayed as units may or may not be physical units, and may be located in one place or may be distributed over a plurality of network units. Some or all of the units may be selected according to actual needs to achieve the objectives of the solutions of the embodiments.

In addition, functional units in the embodiments of this application may be integrated into one processing unit, or each of the units may be physically separated, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A charging method, applied to a charging apparatus, wherein the charging apparatus charges a to-be-charged apparatus in a contact charging manner, and the method comprises:

   receiving first information sent by the to-be-charged apparatus, wherein the first information comprises remaining electric quantity information of the to-be-charged apparatus;
   determining a target charging policy based on the first information, wherein the target charging policy is one charging policy determined from a plurality of candidate charging policies, and charging policies in the plurality of candidate charging policies have different charging rates; and
   charging the to-be-charged apparatus according to the target charging policy.

2. The method according to claim **1,** wherein the first information further comprises a first moment, the first moment is a moment which is recorded by the to-be-charged apparatus and at which an interrupt signal is generated, the interrupt signal is a signal generated by touching when the charging apparatus charges the to-be-charged apparatus, and the determining a target charging policy based on the first information comprises:

obtaining a difference between the first moment and a second moment, wherein the second moment is a moment which is recorded by the charging apparatus and at which the interrupt signal is generated; and

determining the target charging policy based on the remaining electric quantity information if the difference is less than a first preset threshold.

3. The method according to claim 1, wherein the first information further comprises a first power, the first power is a transmitted power at which the to-be-charged apparatus sends the first information, and the determining a target charging policy based on the first information comprises:

obtaining a second power, wherein the second power is a received power at which the charging apparatus receives the first information;

determining a first distance based on the first power and the second power, wherein the first distance is a distance between the charging apparatus and the to-be-charged apparatus; and

determining the target charging policy based on the remaining electric quantity information if the first distance is less than a second preset threshold.

4. The method according to claim 2 or 3, wherein the charging apparatus comprises a microcontroller unit (MCU), and the determining the target charging policy based on the remaining electric quantity information comprises:

determining, by the MCU, the target charging policy based on the remaining electric quantity information.

5. The method according to claim 4, wherein the charging apparatus further comprises a charging management module, and the charging the to-be-charged apparatus according to the target charging policy comprises:

controlling, by the MCU using the target charging policy, the charging management module to charge the to-be-charged apparatus.

6. A charging method, applied to a to-be-charged apparatus, wherein the to-be-charged apparatus is charged by a charging apparatus using a contact charging method, and the method comprises:

sending first information to the charging apparatus, wherein the first information comprises remaining electric quantity information of the to-be-charged apparatus; and

receiving electric energy outputted by the charging apparatus according to a target charging policy, wherein the target charging policy is one charging policy determined by the charging apparatus based on the first information from a plurality of candidate charging policies, and charging policies in the plurality of candidate charging policies have different charging rates.

7. The method according to claim 6, wherein the sending first information to the charging apparatus comprises:

generating a broadcast signal based on the first information; and

sending the broadcast signal to the charging apparatus according to a preset frequency.

8. The method according to claim 7, wherein the sending the broadcast signal to the charging apparatus according to a preset frequency comprises: sending the broadcast signal to the charging apparatus according to the preset frequency in a Bluetooth manner.

9. The method according to claim 7 or 8, wherein a type of the broadcast signal is a universally unique identification code (UUID) or service data.

10. The method according to any one of claims 7 to 9, wherein the method further comprises:

obtaining current electric quantity information;

determining, according to the current electric quantity information and the remaining electric quantity information, whether an electric quantity of the to-be-charged apparatus increases; and

stopping sending the broadcast information if the electric quantity of the to-be-charged apparatus increases.

11. The method according to any one of claims 6 to 10, wherein the to-be-charged apparatus is a smartwatch or a smart bracelet.

12. A charging system, the charging system comprising a charging apparatus and a to-be-charged apparatus, wherein the charging apparatus charges the to-be-charged apparatus in a contact charging manner, the charging apparatus is configured to perform the method according to any one of claims 1 to 5, and the to-be-charged apparatus is configured to perform the method according to any one of claims 6 to 11.

13. A charging apparatus, the apparatus comprising a processor and a memory, wherein the memory is configured to store a computer program, and the processor is configured to invoke the computer program from the memory and run the computer program, so that the apparatus performs the method according to any one of claims 1 to 5.

**14.** A to-be-charged apparatus, the apparatus comprising a processor and a memory, wherein the memory is configured to store a computer program, the processor is configured to invoke the computer program from the memory and run the computer program, and the apparatus is enabled to perform the method according to claim 6 or 11.

**15.** A chip, comprising a processor, wherein when the processor executes instructions, the processor performs the method according to any one of claims 1 to 5, or the processor performs the method according to claim 6 or 11.

**16.** An electronic device, the electronic device comprising a processor, wherein the processor is configured to be coupled to a memory, and reads instructions in the memory, and the electronic device is enabled to perform, according to the instructions, the method according to any one of claims 1 to 5, or the electronic device is enabled to perform, according to the instructions, the method according to claim 6 or 11.

**17.** A computer-readable storage medium, the computer-readable storage medium storing a computer program, wherein when the computer program is executed by a processor, the processor is enabled to perform the method according to any one of claims 1 to 5, or the processor is enabled to perform the method according to claim 6 or 11.

Electronic device 100

FIG. 1

(a)

(b)

FIG. 2

| To-be-charged apparatus | | Charging apparatus |

S101: Send first information ──────▶

S102: Determine a target charging policy based on the first information

S103: Charge the to-be-charged apparatus according to the target charging policy

FIG. 3

100

200

300

FIG. 4

FIG. 5

FIG. 6

FIG. 7

EP 4 648 251 A1

FIG. 8

| Receive first information sent by a to-be-charged apparatus | S601 |
|---|---|

| Determine a target charging policy based on the first information | S602 |
|---|---|

| Charge the to-be-charged apparatus according to the target charging policy | S603 |
|---|---|

FIG. 9

| Send first information to a charging apparatus | S701 |
|---|---|

| Receive electric energy outputted by the charging apparatus according to a target charging policy | S702 |
|---|---|

FIG. 10

Charging apparatus 500

Obtaining unit 510

Processing unit 520

FIG. 11

To-be-charged apparatus 600

Obtaining unit 610

Processing unit 620

FIG. 12

700

701

Processor

Instruction

703

702

Memory

Program

704

Communication
unit

705

FIG. 13

## INTERNATIONAL SEARCH REPORT

| International application No. |
| --- |
| **PCT/CN2023/135157** |

### A. CLASSIFICATION OF SUBJECT MATTER

H02J7/00(2006.01)i

According to International Patent Classification (IPC) or to both national classification and IPC

### B. FIELDS SEARCHED

Minimum documentation searched (classification system followed by classification symbols)

IPC: H02J

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 充电策略, 触点, 触碰, 接触, 电量, 速度, 速率, 匹配, 距离, charging strateg+, contact+, electric quantity, SOC, speed, rate, match+, distance

### C. DOCUMENTS CONSIDERED TO BE RELEVANT

| Category* | Citation of document, with indication, where appropriate, of the relevant passages | Relevant to claim No. |
| --- | --- | --- |
| X | CN 115579971 A (BEIJING XIAOMI MOBILE SOFTWARE CO., LTD.) 06 January 2023 (2023-01-06) description, paragraphs 79-87, 183 and 189, and figure 4 | 1, 3-9, 11-17 |
| A | CN 105308820 A (SZ DJI TECHNOLOGY CO., LTD.) 03 February 2016 (2016-02-03) entire document | 1-17 |
| A | CN 112671080 A (HONOR TERMINAL CO., LTD.) 16 April 2021 (2021-04-16) entire document | 1-17 |
| A | US 2020073148 A1 (SNAP INC.) 05 March 2020 (2020-03-05) entire document | 1-17 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **19 February 2024** | **22 February 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/135157**

| Patent document cited in search report | | | Publication date (day/month/year) | Patent family member(s) | | | Publication date (day/month/year) |
|---|---|---|---|---|---|---|---|
| CN | 115579971 | A | 06 January 2023 | US | 2022407330 | A1 | 22 December 2022 |
|  |  |  |  | EP | 4109705 | A1 | 28 December 2022 |
| CN | 105308820 | A | 03 February 2016 | WO | 2015188344 | A1 | 17 December 2015 |
|  |  |  |  | US | 2017126031 | A1 | 04 May 2017 |
| CN | 112671080 | A | 16 April 2021 | | None | | |
| US | 2020073148 | A1 | 05 March 2020 | EP | 3844855 | A1 | 07 July 2021 |
|  |  |  |  | KR | 20210047944 | A | 30 April 2021 |
|  |  |  |  | US | 2022197062 | A1 | 23 June 2022 |
|  |  |  |  | WO | 2020046749 | A1 | 05 March 2020 |
|  |  |  |  | CN | 113016115 | A | 22 June 2021 |

Form PCT/ISA/210 (patent family annex) (July 2022)

**REFERENCES CITED IN THE DESCRIPTION**

**Patent documents cited in the description**

- CN 202310284895